# EUROPEAN PATENT SPECIFICATION

(11) **EP 3 812 205 B1**
(45) Date of publication and mention of the grant of the patent: **02.10.2024**
(21) Application number: 19205225.6
(22) Date of filing: 25.10.2019
(51) Int. Cl.: B60L 58/18, H02J 7/00

(54) **POWER SUPPLY SYSTEM**
STROMVERSORGUNGSSYSTEM
SYSTÈME D'ALIMENTATION ÉLECTRIQUE

(43) Date of publication of application: 28.04.2021
(73) Proprietor: Samsung SDI Co., Ltd., Gyeonggi-do 17084 (KR)
(72) Inventor: KURCIK, Peter, 8505 St. Nikolai im Sausal (AT); HOFER, Maximilian, 8230 Hartberg (AT); PRETSCHUH, Markus, 8020 Graz (AT); MAXL, Florian, 8020 Graz (AT); PISCHLER, Mathias, 8401 Kalsdorf (AT)
(74) Representative: Gulde & Partner

(56) References cited:
- WO-A1-2019/111878
- US-A1- 2011 001 357
- US-A1- 2012 187 887
- US-A1- 2016 352 131
- US-A1- 2018 257 506

## Description

### Field of the Invention

The present invention relates to a power supply system for cold crank functionality for providing power to components of a battery system of a vehicle. Further, the present invention relates to a vehicle with such a power supply system.

### Technological Background

In recent years, vehicles have been developed using electric power as a source of motion. An electric vehicle is an automobile that is powered by an electric motor using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like. Rechargeable batteries may be used as a battery module formed of a plurality of unit battery cells coupled in series and/or in parallel so as to provide a high energy density, in particular for motor driving of a hybrid vehicle. A battery module may be formed by interconnecting the electrode terminals of the plurality of unit battery cells depending on a required amount of power and in order to realize a high-power rechargeable battery. The cells can be connected in series, parallel or in a mixture of both to deliver the desired voltage, capacity, or power density. Components of battery packs include the individual battery modules and the interconnects, which provide electrical conductivity between them.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge, potential electrical performance, charging ability and internal resistance as well as actual or predicted power demands or surpluses of the consumers.

Battery systems usually comprise a battery control for processing the aforementioned information. The battery control may comprise controllers of the various electrical consumers and contain suitable internal communication busses, e.g. a SPI or CAN interface. The battery control may further communicate with battery submodules, for example with cell supervision circuits or cell connection and sensing units. Thus, the battery control may be provided for managing the battery stack, such as by protecting the battery from operating outside its safe operating area, monitoring its state, calculating secondary data, reporting that data, controlling its environment, authenticating it and/or balancing it. Typically, the battery control may control a power switch to a load and may switch the load in various fault situations.

The US 2016/0352131 A1 discloses a multiple battery charging and discharging system which controls the configuration of multiple batteries arranged in multiple battery banks. The WO 2019111878 A1 discloses a technique for detecting an offset error of a current. The US 2011/0001357 A1 discloses a vertical bus circuit which includes multiple devices for transmitting signals between the bus devices. The US 2012/0187887 A1 discloses a power unit for an electric vehicle which includes a first power source and a second power source to supply power to a load. The US 2018/0257506A1 teaches a battery system with two types of batteries which are used for providing power to various power consumers of the vehicle.

In a cold crank case the power supply for various electronic units of a battery system may provide not sufficient power in a transient time regime. A board net voltage may for example drop down to about 3 V (Volts) during cold crank which is not enough for several electronic units.

Current solutions of the prior art use boost converters to support cold crank functionality. For example, boost converters may boost dropped supply voltages from 3 V up to 6 V to keep power consuming electronic units supplied.

However, boost converters are costly. For the boosting functionality at least inductors, caps, diodes, a MOSFETs and shunts are required. Furthermore, the circuitry has to provide electronic units and power switches, e.g. relays, which means that output power of several watts are needed. For boosting a voltage from 3 V currents of around 1 A have to be provided.

It is thus an object of the present invention to overcome or reduce at least some of the drawbacks of the prior art. In particular it is an object to provide a power supply system for providing power to components of a battery system whose electrical components are supported with persistent and sufficient power in cold crank conditions thereby circumventing the requirement of a boost converter.

### Summary of Invention

Embodiments of the present disclosure seek to solve at least one of the problems existing in the prior art to at least some extent.

A power supply system for cold crank functionality for providing power to components of a battery system of a vehicle is provided according to claim 1.

A cold crank mode means that the supply voltage of the first power supply has dropped below the threshold voltage due to cold crank. The normal mode is referred to the case, where the supply voltage of the first power supply is above the threshold voltage. The electronic unit may be, expressed in other words, a power consuming electronic unit or a power consuming electronic component of a battery system. In a battery system several electronic units need to be supplied with a sufficient power. The electronic unit is a microprocessor. The microprocessor requires for example a supply voltage of 5 V. In the cold crank mode or cold crank case, the first power supply can drop below this required supply voltage, for example down to 3 V for a time window of typically about 10-15 ms. The power switch is a relay. The power switch, i.e. the relay, may be still controllable with a supply voltage of 3 V or even below 3 V. For example, present relay control units and/or relays may require 2.4 V nominally. Therefore, the power supply system has the advantage that the power switch unit according to the present invention can still be controlled by the first power supply even in the cold crank mode. The electronic unit as separate unit to the switch control unit is electrically connected to the second power supply to be powered in the cold crank mode or cold crank case. First and second power supply may be independent and/or separated from each other. The second power supply may then be not affected during cold crank. The present invention has the advantage that a second power supply can take over the power supply of the electronic unit or electronic units, when the first power supply unit drops below the voltage threshold. The switching unit may be positioned separately from the electronic unit, but the invention is not restricted thereto and the switching unit may also be integrated in the electronic unit itself. Electrically disconnect may mean that the corresponding power supply cannot supply any power to the electronic unit. Electrically connect may mean that the corresponding power supply can supply power to the electronic unit. With the second power supply, which supplies in the cold crank time window, the use of a boost converter is avoided and a persistent power supply also in a cold crank case is provided.

In a preferred embodiment, the first power supply may be a board net voltage of a vehicle and/or the second power supply may be a battery cell stack comprising a plurality of battery cells. The board net voltage may preferably be a 12 V board net which is the conventional supply board net in an electric vehicle. The 12 V board net may be provided by a 12 V battery, e.g. a lead acid battery or a Nickel-Cadmium battery, but the invention is not restricted thereto. The second power supply may preferably be the system voltage of the battery cell stack, which provides preferably 48 V, but the invention is not restricted thereto. The 48 V output may be provided by a stack of 12 battery cells each with a nominal output voltage of 4 V, but the invention is also not restricted thereto. In other embodiments, the second power supply may be an intermediate output voltage from a sub stack of the above described battery stack providing 4*n V, where n is the number of battery cells of the sub stack.

Preferably, the threshold voltage may be between 5 and 6 V, preferably between 5 and 5.5 V, more preferably between 5 and 5.2 V. These thresholds guarantee that the power supply does not drop below 5 V, which for many electronic units, e.g. the microprocessor or CAN transceiver, is the required supply voltage. Therefore, as soon as this threshold is met by the first power supply, the second power supply is electrically connected to the electronic unit such that sufficient power supply is still available.

In a preferred embodiment, the switching unit may be configured to electrically connect the first power supply to the electronic unit and electrically disconnect the second power supply from the electronic unit, when the voltage of the first power supply rises above the threshold voltage. Thereby, the second power supply is advantageously loaded only for the minimum amount of time necessary. Often, the voltage drop of the first power supply may last usually only for several ms, mostly 10-15 ms, such that after this time interval the first power supply may then fulfill its role as main power supplier.

Preferably, the switching unit may comprise a first input electrically connected to the first power supply, a second input electrically connected to the second power supply and an output electrically connected to the electronic unit. The switching unit is thereby a separate unit, receiving both voltages from both power supplies.

In a preferred embodiment, the switching unit may comprise a first diode, a second diode and an output node, wherein the first power supply is electrically connected to the anode of the first diode, the second power supply is electrically connected to the anode of the second diode and the output node is electrically connected to the cathode of the first and second diode, and wherein the output node is further electrically connected to the electronic unit. A diode is, as commonly known, an electronic element which conducts current primarily in one direction. It thus may have low resistance when forward biased and high resistance when reverse biased. The advantage here is that this selecting unit works fully automatic. The connected diodes select or set the higher voltage of the two power supplies conductive and disconnect or set the lower voltage non-conductive. The switching is thus dependent on the voltages applied to the respective diodes. In particular, the voltage applied to the anode of the second diode coincides with the threshold voltage. A voltage below 5 V at the anode of the first diode will set the first diode non-conductive, thus effectively disconnecting the first power supply, while the second diode is set conductive or is in other words forward biased, thus effectively connecting the second power supply.

Preferably, at least the second diode may be a low drop-out diode. Low drop-out diodes are also referred to as active diodes. These diodes have a reduced inner voltage drop. Thus, voltage losses are reduced or even eliminated. When the voltage input to the anode is 5V, this is then advantageously also the 5V that will supplied to the electronic unit.

In a preferred embodiment, the second power supply is a battery cell stack comprising a plurality of battery cells between a first node and second node, the second node being on a higher electrical potential than the first node and electrically connected to the second input of the switching unit. The first and the second nodes are preferably at the ends of the battery cell stack, but the invention is not restricted thereto. Preferably, the first node is set to ground potential.

Preferably, the power supply system may comprise a voltage regulator electrically interconnected between the second node of the battery cell stack and the second input of the switching unit, wherein the voltage regulator is configured to reduce the input voltage received from the second node to an output voltage supplied to the switching unit which is lower than the input voltage. In preferred cases, the voltage on the second node is 48 V. This voltage is in generally too high for supplying the electronic units. In particular, for using the automatic diodes for switching the power supplies, the voltage has to be reduced from 48 V to, e.g., preferably 5 V by the additional voltage regulator. The voltage regulator requires substantially less components than a boost converter.

In a preferred embodiment, the power supply system may comprise an analog front end chip, AFE, which is electrically connected to the first node and the second node of the battery cell stack to receive the voltage in between, further comprising an internal voltage regulator configured to reduce the received voltage to an output voltage lower than the input voltage, and wherein the AFE is configured supply the output voltage to an output electrically connected to the second input of the switching unit. The analog front end chip, AFE, may be in general suitable to measure several quantities along the battery stack. That includes for example the charging/discharging current, the temperature, voltages and cell voltages. In here, the AFE chip may receive the voltage difference between first and second node. Due to the presence of an internal voltage regulator, the advantage is that this voltage can be internally be transformed into a lower voltage suitable for supply to the electronic unit during cold crank conditions. In this embodiment, advantageously, a separate voltage regulator is not needed.

Preferably, the voltage regulator and/or the internal voltage regulator may be a low-dropout regulator and/or wherein at least one of the voltage regulators may be configured to output a voltage of at least 5V. These regulators are preferably transistor-Zener-diode regulators, e.g. comprising resistors, transistors and Zener-diode, but the invention is not restricted thereto and also other voltage regulator implementations may be used.

In a preferred embodiment, a power supply regulator may be interconnected between the switching unit and the electronic unit, the power supply regulator configured to regulate the received voltage to a supply voltage required by the electronic unit. Thereby, individual voltages can be adapted and varied for the corresponding electronic units.

Preferably, the electronic unit is a microprocessor. The microprocessor may be the main electronic unit in the power supply system for safety purposes, e.g. controlling the power switch, and thus has to be persistently supplied. Therefore, in cold crank conditions, the microprocessor should not be unavailable in that time. Therefore, the present invention guarantees a persistent supply of the microprocessor due to the second power supply.

In a preferred embodiment, the microprocessor may be configured to switch into a low power consumption mode, when the microprocessor detects that the supplied power has dropped below a threshold power. Such low power consumption mode may also be referred to as a sleeping mode. Since the power supplies, in particular from the AFE, may support smaller currents, e.g. 5 to 10 mA, a low power consumption mode may be suitable to match the reduced power provided. Thus, the microprocessor may be configured to change to a low power consumption mode. In this low power consumption mode the microprocessor may be capable of performing core functions, for example security relevant functions, which may be to control the power switch and initiate a switch off in a fault state.

In another aspect, a battery system with a power supply system according to any of the embodiments as described above is disclosed.

In another aspect, a vehicle is disclosed including a power supply system according any of the embodiments as described above.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: shows an example of a power supply system according to a first embodiment of the invention;
- Fig. 2: shows an example of a power supply system according to a second embodiment of the invention; and
- Fig. 3: shows an example of a power supply system according to a third embodiment of the invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

In the following description of embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Expressions as "connected to" or "coupled to" to another entity it can be directly connected to or coupled to or one or more elements may be present. It will be further understood that the terms "comprises," "comprising," "includes," and "including," when used in this specification, specify the presence of the stated features, integers, steps, operations, elements, and/or components, but do not preclude the presence or addition of one or more other features, integers, steps, operations, elements, components, and/or groups thereof.

Expressions such as "at least one of," when preceding a list of elements, modify the entire list of elements and do not modify the individual elements of the list.

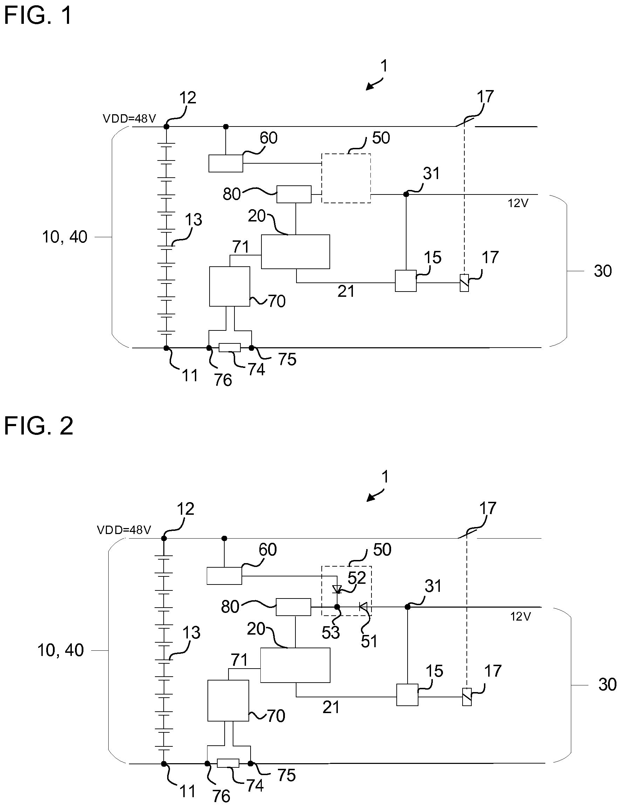

Fig. 1 discloses a power supply system 1 for cold crank functionality for a battery system of a vehicle according to a first embodiment of the invention. The power supply system 1 comprises a switch control unit 15 for controlling a power switch 17 to switch an external load, the latter not shown here. The power switch 17 is a relay and the switch control unit 15 is a relay control unit.

The power supply system 1 further comprises an electronic unit 20.. As depicted in Figs. 1-3, the electronic unit 20 is a microprocessor 20.

A first power supply 30 is electrically connected to the switch control unit 15. Therefore, a node 31 is comprised to which the voltage is supplied to by the first power supply 30, wherein the node 31 is electrically connected to an input of the switch control unit 15. Thereby, the first power supply 30 is configured to supply the switch control unit 15 with electric power. The node 31 and the line connected to the node may be on high potential provided by the first power supply 30, while the other line may be grounded, see the lower line in Fig. 1.

The first power supply 30 further is electrically connected to the electronic unit 20 in a normal mode and is thereby configured to electrically supply the electronic unit 20 with power in a normal mode.

The power supply system 1 comprises further a second power supply 40. The second power supply 40 may preferably be a battery cell stack 10 generating a system voltage VDD at the ends of the battery cell stack 10, as it can be seen in the example embodiments in Figs. 1 to 3, which provides preferably 48 V, but the invention is not restricted thereto. As an example, the 48 V output may be provided by a stack of 12 battery cells each with a nominal output voltage of 4 V, but this is merely an example. The second power supply 40 may be for example an intermediate output voltage from a sub stack of the above described battery cell stack 10.

Further, the power supply system 1 comprises a switching unit 50. The switching unit 50 is configured to electrically disconnect the first power supply 30 from the electronic unit 20 in a cold crank mode. A cold crank mode occurs when the supply voltage of the first power supply 30 drops or is below a threshold voltage. Usually, such a voltage drop occurs for a short time window of about 10-15 ms. Further the switching unit 50 is configured to connect the second power supply 30 to the electronic unit 20, such that the second power supply 40 supplies the electronic unit 20 in the cold crank mode. Thereby, the supply of the electronic unit 20, that is the microprocessor 20, is guaranteed throughout the transient time window of cold crank. In here, as can be seen in Fig. 1, the first power supply 30 remains electrically connected to the switch control unit 15 to supply power to the switch control 15 also in the cold crank mode. That is, the node 31 is interconnected between switching unit 50 and the first power supply 30.

The first power supply 30 may preferably be a board net voltage of a vehicle. The board net voltage, as shown in this example embodiment, may support 12 V in a normal mode. In a cold crank case, the supply voltage of the first power supply may drop to lower bound above zero, usually 3 V, for a certain time, e.g. between 10-15 ms. The 3 V may mostly be a lower bound, i.e. the board net voltage does not drop below the 3 V. These 3 V may still be sufficient to provide power to the switch control unit 15 to operate the power switch 17. A power switch control 15, a relay control, may be operable with voltages below 3 V, for example 2.4 volts, such that, as a beneficial effect of the present invention, the first power supply 30 remains supplier for the switch control unit 15. Therefore, in cold crank mode, an unnecessary load of the second power supply 40 may be avoided.

A further advantage of the present invention may be that the electronic unit 20 is persistently supported with voltages above the threshold voltage by the second power supply 40. Hereby, the first and second power supplies 30, 40 may be independent and/or separated from each other, as can be seen in the Figs. 1 to 3, and only the first power supply 30 may be affected by the cold crank. Thus, the second power supply 40 may be configured to support the required power for the electronic unit 20 also during cold crank. The threshold voltage may preferably be set to be between 5 and 6 V, preferably between 5 and 5.5 V, even more preferably between 5 and 5.2 V. Electronic units 20 within the battery systems as the microprocessor 20 require 5 V as voltage input. Therefore, this threshold guarantees that voltage requirements are met throughout a crank cold time regime.

Also in the reverse case, when the voltage of the first power supply 30 rises back above the threshold voltage again, the switching unit 50 may be configured to electrically connect the first power supply 30 to the electronic unit 20 and electrically disconnect the second power supply 40 from the electronic unit 20. Then, the original situation is reestablished. The time, in which the second power supply 40 is required, is thereby minimized, since by passing the threshold voltage, the first power supply is again available to provide sufficient power to the electronic unit 20 and the second power supply 40 is then not needed for this purpose anymore.

The switching unit 50, as can be seen in this example embodiment, may be interconnected between the first power supply 30 and the electronic unit 20, and interconnected between the second power supply 40 and the electronic unit 20. Explicitly, a first input of the switching unit 50 may be electrically connected to the first power supply 30 and a second input is electrically connected to the second power supply 40. Thereby, both voltages of the respective power supplies 30, 40 are supplied to the switching unit 50. The switching unit 50 then may comprise an output, wherein the output may be electrically connected to the electronic unit 20. The described switching unit 50 is thereby an individual entity which receives in normal mode as well as in cold crank mode both power supply voltages of the respective power supplies 30, 40 and supplies one of them to the electronic unit 20. In alternative embodiments, the switching unit may be integral to the electronic unit 20.

Referring to the second power supply 40, the battery cell stack 10 may comprise a first node 11 and a second node 12. Here, as example the nodes 11, 12 are positioned at the opposite ends of the battery cell stack 10 such that potential difference refers to the system voltage VDD provided by the battery cell stack 10, e.g. 48 V in the present case as example. The first node 11 may be grounded such that the second node 12 may refer to the high voltage node.

The second node 12, in this particular embodiment, may be electrically connected to the second input of the switching unit 50. Thereby, the high potential of the battery cell stack 10 may be supplied to the switching unit 50 and, in a state of cold crank, may be utilized to supply the electronic unit 20, in particular the microprocessor 20.

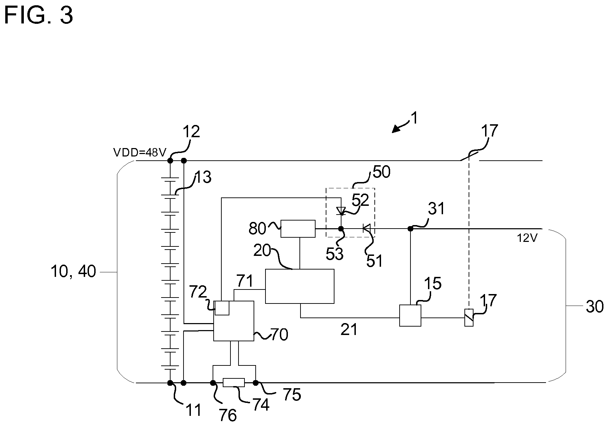

In this particular example, a voltage regulator 60 may be electrically interconnected between the second node 12 of the battery cell stack 10 and the switching unit 50. In particular, the input of the voltage regulator 60 may be electrically connected to the second node 12 of the battery cell stack 10, an output of the voltage regulator 60 may be electrically connected to the second input of the switching unit 50. The voltage regulator 60 may be configured to reduce the input voltage, e.g. the 48 V, to an output voltage lower than the input voltage. This voltage may preferably be 5V as it is the operation voltage of a microprocessor 20 and many other electronic units 20. In other embodiments, the voltage regulator 60 may be configured to output a voltage of at least 5V or of between 5 and 6 V, preferably between 5 and 5.5 V, even more preferably between 5 and 5.2 V. This output voltage can also be used to define or set the threshold voltage, see for example Fig. 2 or Fig. 3.

The voltage regulator 60 may here be a low-dropout regulator, which typically only requires Zener-diode, resistors and a MOSFET and is thus by far less costly than a boost converter as used in the prior art. This additional external voltage regulator 60 is beneficial, as it creates the operational voltage from the too high output voltage of the battery cell stack 10 for the power consuming electronic units 20 in the cold crank mode, i.e., when the first power supply 30 cannot supply enough voltage in a transient cold crank time window of e.g. 10-15 ms. Then, the regulated voltage may be supplied to the electronic unit 20, as can be seen in Fig. 1.

Further, the power supply system may comprise a power supply regulator 80 interconnected between the switching unit 50 and the electronic unit 20. The power supply regulator 80 is configured to regulate the received voltage to a particular operational voltage required by the electronic unit 20, e.g. for a particular time interval or for particular tasks.

Only for completeness of the description of Fig. 1, the power supply system 1 may further comprise an analog-front-end chip 70, AFE to sense and receive analog data of various relevant parameters of the battery cell stack 10. E.g., as can be seen, a shunt 74 may be positioned in series with the first node 11. Two nodes, 75, 76 are connected on each side of the shunt 74 which are electrically connected to the AFE 70. Thereby, charging/discharging current through the shunt 74 may be determined by the AFE 70 by measuring the (small) voltage drop across the shunt 74 for given predetermined (small) resistance. Other parameters to be measured may be the temperature or individual cell voltages (not shown here explicitly).

The AFE 70 may then send a state signal to the microprocessor 20 via a control line 71 indicative of the measured quantity. The microprocessor 20 may then send a control signal via control line 21 in response to the received state signal to the switch control unit 15. For example, when the AFE 70 measures an analogue value indicative of a fault state of the battery cell stack 10, a state signal indicative of the fault state may be sent to the microprocessor 20 via control line 71. The microprocessor 20 may then in response send a control signal to control the relay control via control line 21 to switch the power switch when a fault state is detected.

Fig. 2 shows a power supply system 1 according to a second embodiment of the invention. In the following, only the differences with respect to Fig. 1 are described. For the same features it is hereby referred to the description of Fig. 1.

In this preferred embodiment, a preferred switching unit 50 is described, which automatically selects the power supply 30, 40 with the higher supply voltage. Therefore, the switching unit 50 may comprise a first diode 51, a second diode 52 and an output node 53.

The first power supply 30, as can be seen in the Figure 2, may be electrically connected to the anode of the first diode 51. The second power supply 40 may be electrically connected to the anode of the second diode 52. The output node 53 may be electrically connected to the cathode of the first and second diode 51, 52, and wherein the output node 53 may be further electrically connected to the electronic unit 20. The advantage of this particular embodiment is that the selecting works fully automatic. The connected diodes 51, 52 select or set the power supply 30, 40 with the higher voltage conductive and disconnect or set the power supply 30, 40 with the lower voltage non-conductive.

In particular, the voltage applied to the anode of the second diode 52 coincides in this embodiment with the threshold voltage. Usually, due to the voltage regulator 60 in Fig. 1 or the internal voltage regulator 72 in Fig.3, this voltage may be set to 5V or slightly more, e.g. 5V plus the voltage drop across the second diode, but the invention is not restricted thereto.

Also here, the threshold voltage is between 5 and 6 V, preferably between 5 and 5.5 V, more preferably between 5 and 5.2 V.

A voltage below 5 V at the anode of the first diode 51 may set the first diode 51 non-conductive since it is then reverse biased, if 5 V are applied to the anode of the second diode 52. Thus, the switching unit 50 effectively disconnects the first power supply 30, while the second diode 52 is set conductive, since it is then forward biased. When the first power supply 30 recovers to a voltage above the threshold voltage after the cold crank time window, i.e. the voltage applied to the anode of the second diode 52, the first diode 51 becomes forward biased and the second diode 52 reverse biased. Thus, the switching element 50 automatically disconnects the second power supply 40 and electrically connects the first power supply to the electronic unit 20. Therefore, the switching unit has the advantage of a fully automatic switching unit without additional control units required.

In a preferred embodiment, the second diode 52 and/or the first diode 51 is a low drop-out diode. Low drop-out diodes are also referred to as active diodes. These diodes have a reduced inner voltage drop and voltage losses are reduced or even eliminated. When a voltage of 5V is applied to the anode of the second diode 52, for example, substantially 5V are also supplied to the electronic unit 20 in a cold crank.

Fig. 3 shows a power supply system 1 according to a third embodiment of the present invention. Also in the following only the differences with respect to Fig. 1 or Fig. 2 are described. For the same features it is hereby referred to the description of Fig. 1 or Fig. 2. Even though, the following embodiment is described with the specific switching unit 50 as described in Fig. 2, it is clear that the following embodiment can also be combined with the features of Fig. 1, only.

In this embodiment, the power supply system 1 may comprise as well an analog front end chip 70, AFE. The AFE 70 is hereby electrically connected to the first node 11 and the second node 12 of the battery cell stack 10 to measure and receive the voltage in between the nodes 11, 12. Again, in other embodiments, the AFE 70 may receive cell voltages of individual battery cells 13 or sub stacks of the battery cell stack. Therefore, first node 11 and second node 12 may have different positions within the battery cell stack 10. Here, in this preferred embodiment, the first node 11 and the second node 12 positioned at the respective ends of the battery cell stack 10. The AFE 70 thus receives the system voltage VDD, typically 48 V, but the invention is not restricted thereto.

In this particular preferred embodiment, the AFE 70 may comprise an internal voltage regulator 72. The internal voltage regulator 72 may be configured to reduce the received voltage to an output voltage lower than the input voltage. Preferably, the output voltage of the internal voltage regulator 72, and thus from the AFE 70, may be at least 5 V or exactly 5 V or slightly above to compensate for a voltage loss at the second diode 52. The voltage may again be between 5 and 6 V, preferably between 5 and 5.5 V, more preferably between 5 and 5.2 V.

The AFE 70 may be configured to supply the output voltage to an output electrically connected to the second input of the switching unit 50 or, in case of the embodiment described in Fig. 2, to the anode of the second diode 52.

Also here, the internal voltage regulator 72 may be a low-dropout regulator. These regulators are preferably transistor-Zener-diode regulators, e.g. comprising resistors, transistors and Zener-diode, but the invention is not restricted thereto and also other voltage regulator implementations may be used.

In a further embodiment, when the electronic unit 20 is a microprocessor 20, the microprocessor 20 may be configured to switch into a low power consumption mode. The condition for that may be that the microprocessor 20 detects that the supplied power or supplied current to the microprocessor 20 has dropped below a threshold power or threshold current, respectively. Since the power supplies, in particular from the voltage regulator 72 of the AFE 70 since it may be weaker than an external voltage regulator as in Fig. 1 or 2, may support smaller currents, e.g. typically between 5 to 10 mA a low power consumption mode may be beneficial. This mode may be implementable by an application or computer program runnable on the microprocessor 20, in one or more computing devices, executing computer program instructions and interacting with other system components for performing the various functionalities described herein. The computer program instructions may be stored in a memory which may be implemented in a computing device using a standard memory device, such as, for example, a random access memory (RAM).

In general, the electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the exemplary embodiments of the present invention.

### Reference signs

- 1: power supply system

- 10: battery cell stack
- 11: first node
- 12: second node
- 13: battery cell

- 15: relay control unit
- 17: relay

- 20: microprocessor
- 21: control line

- 30: first power supply
- 31: node

- 40: second power supply

- 50: switching unit
- 51: first diode
- 52: second diode
- 53: output node

- 60: voltage regulator
- 70: analog front end chip (AFE)
- 71: control line
- 72: internal voltage regulator
- 74: shunt
- 75: node
- 76: node

- 80: power supply regulator

## Claims

1. A power supply system (1) for cold crank functionality for providing power to components of a battery system of a vehicle, comprising:
- a microprocessor (20);
- a first power supply (30);
- the first power supply (30) electrically connected to the microprocessor (20) to electrically supply the microprocessor (20) in a normal mode;
- a second power supply (40);
**characterized in**,
- a relay control unit (15) for controlling a relay (17) to switch an external load;
- a switching unit (50) configured to:
electrically disconnect the first power supply (30) from the microprocessor (20) in a cold crank mode, whereas a cold crank mode occurs when the voltage of the first power supply (30) drops below a threshold voltage;
electrically connect the second power supply (40) to the microprocessor (20) in the cold crank mode, the second power supply (40) configured to electrically supply the microprocessor (20) in the cold crank mode; and
- the first power supply (30) is electrically connected to the relay control unit (15) to supply the relay control unit (15) in the normal mode and in the cold crank mode, whereas the relay control unit (15) is operable with voltages below the threshold voltage.

2. The power supply system (1) of claim 1, wherein the first power supply (30) is a board net voltage of a vehicle and/or the second power supply (40) is a battery cell stack (10) comprising a plurality of battery cells (13).

3. The power supply system (1) of one of the claims 1 to 2, wherein the threshold voltage is between 5 and 6 V, preferably between 5 and 5.5 V, more preferably between 5 and 5.2 V.

4. The power supply system (1) of one of the claims 1 to 3, wherein the switching unit (50) is configured to electrically connect the first power supply (30) to the microprocessor (20) and electrically disconnect the second power supply (40) from the microprocessor (20), when the voltage of the first power supply (30) rises above the threshold voltage.

5. The power supply system (1) of one of the claims 1 to 4, wherein the switching unit (50) comprises a first input electrically connected to the first power supply (30), a second input electrically connected to the second power supply (40) and an output electrically connected to the microprocessor (20).

6. The power supply system (1) of claim 5, wherein the switching unit (50) comprises a first diode (51), a second diode (52) and an output node (53), wherein the first power supply (30) is electrically connected to the anode of the first diode (51), the second power supply (40) is electrically connected to the anode of the second diode (52) and the output node (53) is electrically connected to the cathode of the first and second diode (51, 52), and wherein the output node (53) is further electrically connected to the microprocessor (20).

7. The power supply system (1) of claim 6, wherein at least the second diode (52) is a low drop-out diode.

8. The power supply system (1) of one of the claims 5 to 7, wherein the second power supply (40) is a battery cell stack (10) comprising a plurality of battery cells (13) between a first node (11) and second node (12), the second node (12) being on a higher electrical potential than the first node (11) and electrically connected to the second input of the switching unit (50).

9. The power supply system (1) of claim 8, comprising a voltage regulator (60) electrically interconnected between the second node (12) of the battery cell stack (10) and the second input of the switching unit (50), wherein the voltage regulator (60) is configured to reduce the input voltage received from the second node (12) to an output voltage supplied to the switching unit (50) which is lower than the input voltage.

10. The power supply system (1) of claim 8, wherein the power supply system (1) comprises an analog front end chip (70), AFE, which is electrically connected to the first node (11) and the second node (12) of the battery cell stack (10) to receive the voltage in between, further comprising an internal voltage regulator (72) configured to reduce the received voltage to an output voltage lower than the input voltage, and wherein the AFE (70) is configured supply the output voltage to an output electrically connected to the second input of the switching unit (50).

11. The power supply system (1) of one of the claims 9 to 10, wherein the voltage regulator (60) and/or the internal voltage regulator (72) is a low-dropout regulator and/or wherein the voltage regulators (60, 72) are configured to output a voltage between 5 and 6 V, preferably between 5 and 5.5 V, even more preferably between 5 and 5.2 V.

12. The power supply system (1) of one of the claims 1 to 11, further comprising a power supply regulator (80) interconnected between the switching unit (50) and the microprocessor (20), the power supply regulator (80) configured to regulate the received voltage to a supply voltage required by the microprocessor (20).

13. The power supply system (1) of one of the claims 1 to 12, wherein the microprocessor (20) is configured to switch into a low power consumption mode, when the microprocessor (20) detects that the supplied power has dropped below a threshold power.

14. A vehicle including a power supply system (1) according to any one of the preceding claims.

## Patentansprüche

1. Stromversorgungssystem (1) für Kaltstartfunktionalität zum Versorgen von Komponenten eines Batteriesystems eines Fahrzeugs mit Strom, umfassend:
- einen Mikroprozessor (20);
- eine erste Stromversorgung (30);
- wobei die erste Stromversorgung (30) elektrisch mit dem Mikroprozessor (20) verbunden ist, um den Mikroprozessor (20) in einem normalen Modus elektrisch zu versorgen;
- eine zweite Stromversorgung (40);
**gekennzeichnet durch**
- eine Relaissteuereinheit (15) zum Steuern eines Relais (17), um eine externe Last zu schalten;
- eine Schalteinheit (50),
die dazu ausgestaltet ist:
die erste Stromversorgung (30) in einem Kaltstartmodus elektrisch vom Mikroprozessor (20) zu trennen, wobei ein Kaltstartmodus auftritt, wenn die Spannung der ersten Stromversorgung (30) unter eine Schwellenspannung fällt;
die zweite Stromversorgung (40) im Kaltstartmodus elektrisch mit dem Mikroprozessor (20) zu verbinden, wobei die zweite Energieversorgung (40) dazu ausgestaltet ist, im Kaltstartmodus den Mikroprozessor (20) elektrisch zu versorgen; und
- wobei die erste Stromversorgung (30) elektrisch mit der Relaissteuereinheit (15) verbunden ist, um die Relaissteuereinheit (15) im normalen Modus und im Kaltstartmodus zu versorgen, wobei die Relaissteuereinheit (15) mit Spannungen unterhalb der Schwellenspannung betreibbar ist.

2. Stromversorgungssystem (1) nach Anspruch 1, wobei es sich bei der ersten Stromversorgung (30) um eine Bordnetzspannung eines Fahrzeugs handelt und/oder bei der zweiten Stromversorgung (40) um einen Batteriezellenstapel (10) mit einer Mehrzahl von Batteriezellen (13) handelt.

3. Stromversorgungssystem (1) nach einem der Ansprüche 1 bis 2, wobei die Schwellenspannung zwischen 5 und 6 V, vorzugsweise zwischen 5 und 5,5 V, besonders vorzugsweise zwischen 5 und 5,2 V, beträgt.

4. Stromversorgungssystem (1) nach einem der Ansprüche 1 bis 3, wobei die Schalteinheit (50) dazu ausgestaltet ist, die erste Stromversorgung (30) elektrisch mit dem Mikroprozessor (20) zu verbinden und die zweite Stromversorgung (40) elektrisch vom Mikroprozessor (20) zu trennen, wenn die Spannung der ersten Stromversorgung (30) die Schwellenspannung überschreitet.

5. Stromversorgungssystem (1) nach einem der Ansprüche 1 bis 4, wobei die Schalteinheit (50) einen elektrisch mit der ersten Stromversorgung (30) verbundenen ersten Eingang, einen elektrisch mit der zweiten Stromversorgung (40) verbundenen zweiten Eingang und einen elektrisch mit dem Mikroprozessor (20) verbundenen Ausgang umfasst.

6. Stromversorgungssystem (1) nach Anspruch 5, wobei die Schalteinheit (50) eine erste Diode (51), eine zweite Diode (52) und einen Ausgangsknoten (53) umfasst, wobei die erste Stromversorgung (30) elektrisch mit der Anode der ersten Diode (51) verbunden ist, die zweite Stromversorgung (40) elektrisch mit der Anode der zweiten Diode (52) verbunden ist und der Ausgangsknoten (53) elektrisch mit der Kathode der ersten und der zweiten Diode (51, 52) verbunden ist und wobei der Ausgangsknoten (53) ferner elektrisch mit dem Mikroprozessor (20) verbunden ist.

7. Stromversorgungssystem (1) nach Anspruch 6, wobei es sich zumindest bei der zweiten Diode (52) um eine Diode mit geringem Spannungsabfall handelt.

8. Stromversorgungssystem (1) nach einem der Ansprüche 5 bis 7, wobei es sich bei der zweiten Stromversorgung (40) um einen Batteriezellenstapel (10) handelt, der eine Mehrzahl von Batteriezellen (13) zwischen einem ersten Knoten (11) und einem zweiten Knoten (12) umfasst, wobei der zweite Knoten (12) auf einem höheren elektrischen Potential als der erste Knoten (11) liegt und elektrisch mit dem zweiten Eingang der Schalteinheit (50) verbunden ist.

9. Stromversorgungssystem (1) nach Anspruch 8, umfassend einen Spannungsregler (60), der elektrisch zwischen den zweiten Knoten (12) des Batteriezellenstapels (10) und den zweiten Eingang der Schalteinheit (50) geschaltet ist, wobei der Spannungsregler (60) dazu ausgestaltet ist, die vom zweiten Knoten (12) empfangene Eingangsspannung auf eine der Schalteinheit (50) zugeführte Ausgangsspannung zu senken, die niedriger als die Eingangsspannung ist.

10. Stromversorgungssystem (1) nach Anspruch 8, wobei das Stromversorgungssystem (1) einen analogen Front-End-Chip (70), AFE, umfasst, der elektrisch mit dem ersten Knoten (11) und dem zweiten Knoten (12) des Batteriezellenstapels (10) verbunden ist, um die dazwischenliegende Spannung zu empfangen, ferner umfassend einen internen Spannungsregler (72), der dazu ausgestaltet ist, die empfangene Spannung auf eine Ausgangsspannung zu senken, die niedriger als die Eingangsspannung ist, und wobei der AFE (70) dazu ausgestaltet ist, die Ausgangsspannung einem elektrisch mit dem zweiten Eingang der Schalteinheit (50) verbundenen Ausgang zuzuführen.

11. Stromversorgungssystem (1) nach einem der Ansprüche 9 bis 10, wobei es sich bei dem Spannungsregler (60) und/oder dem internen Spannungsregler (72) um einen Regler mit geringem Spannungsabfall handelt und/oder wobei die Spannungsregler (60, 72) dazu ausgestaltet sind, eine Spannung zwischen 5 und 6 V, vorzugsweise zwischen 5 und 5,5 V, ganz besonders vorzugsweise zwischen 5 und 5,2 V, auszugeben.

12. Stromversorgungssystem (1) nach einem der Ansprüche 1 bis 11, ferner umfassend einen Stromversorgungsregler (80), der zwischen die Schalteinheit (50) und den Mikroprozessor (20) geschaltet ist, wobei der Stromversorgungsregler (80) dazu ausgestaltet ist, die empfangene Spannung auf eine vom Mikroprozessor (20) benötigte Versorgungsspannung zu regeln.

13. Stromversorgungssystem (1) nach einem der Ansprüche 1 bis 12, wobei der Mikroprozessor (20) dazu ausgestaltet ist, in einen Modus mit geringem Stromverbrauch zu schalten, wenn der Mikroprozessor (20) erkennt, dass der zugeführte Strom unter eine Schwellenergie gefallen ist.

14. Fahrzeug, umfassend ein Stromversorgungssystem (1) nach einem der vorangehenden Ansprüche.

## Revendications

1. Système d'alimentation en puissance (1) pour une fonctionnalité de démarrage à froid pour fournir une puissance à des composants d'un système de batterie d'un véhicule, comprenant :
- un microprocesseur (20) ;
- une première alimentation en puissance (30) ;
- la première alimentation en puissance (30) étant connectée électriquement au microprocesseur (20) pour alimenter électriquement le microprocesseur (20) dans un mode normal ;
- une seconde alimentation en puissance (40) ;
**caractérisé par**
- une unité de commande de relais (15) pour commander un relais (17) pour commuter une charge externe ;
- une unité de commutation (50) configurée pour :
déconnecter électriquement la première alimentation en puissance (30) du microprocesseur (20) dans un mode de démarrage à froid, tandis qu'un mode de démarrage à froid survient lorsque la tension de la première alimentation en puissance (30) devient inférieure à une tension de seuil ;
connecter électriquement la seconde alimentation en puissance (40) au microprocesseur (20) dans le mode de démarrage à froid, la seconde alimentation en puissance (40) étant configurée pour alimenter électriquement le microprocesseur (20) dans le mode de démarrage à froid ; et
- la première alimentation en puissance (30) est connectée électriquement à l'unité de commande de relais (15) pour alimenter l'unité de commande de relais (15) dans le mode normal et dans le mode de démarrage à froid, tandis que l'unité de commande de relais (15) peut fonctionner avec des tensions inférieures à la tension de seuil.

2. Système d'alimentation en puissance (1) selon la revendication 1, dans lequel la première alimentation en puissance (30) est une tension nette à bord d'un véhicule et/ou la seconde alimentation en puissance (40) est un empilement de cellules de batterie (10) comprenant une pluralité de cellules de batterie (13).

3. Système d'alimentation en puissance (1) selon la revendication 1 ou 2, dans lequel la tension de seuil est entre 5 et 6 V, de préférence entre 5 et 5,5 V, avec plus de préférence entre 5 et 5,2 V.

4. Système d'alimentation en puissance (1) selon l'une des revendications 1 à 3, dans lequel l'unité de commutation (50) est configurée pour connecter électriquement la première alimentation en puissance (30) au microprocesseur (20) et déconnecter électriquement la seconde alimentation en puissance (40) du microprocesseur (20), lorsque la tension de la première alimentation en puissance (30) devient supérieure à la tension de seuil.

5. Système d'alimentation en puissance (1) selon l'une des revendications 1 à 4, dans lequel l'unité de commutation (50) comprend une première entrée connectée électriquement à la première alimentation en puissance (30), une seconde entrée connectée électriquement à la seconde alimentation en puissance (40) et une sortie connectée électriquement au microprocesseur (20).

6. Système d'alimentation en puissance (1) selon la revendication 5, dans lequel l'unité de commutation (50) comprend une première diode (51), une seconde diode (52) et un nœud de sortie (53), dans lequel la première alimentation en puissance (30) est connectée électriquement à l'anode de la première diode (51), la seconde alimentation en puissance (40) est connectée électriquement à l'anode de la seconde diode (52) et le nœud de sortie (53) est connecté électriquement à la cathode des première et seconde diodes (51, 52), et dans lequel le nœud de sortie (53) est en outre connecté électriquement au microprocesseur (20).

7. Système d'alimentation en puissance (1) selon la revendication 6, dans lequel au moins la seconde diode (52) est une diode à faible déperdition.

8. Système d'alimentation en puissance (1) selon l'une des revendications 5 à 7, dans lequel la seconde alimentation en puissance (40) est un empilement de cellules de batterie (10) comprenant une pluralité de cellules de batterie (13) entre un premier nœud (11) et un second nœud (12), le second nœud (12) étant à un potentiel électrique plus élevé que le premier nœud (11) et connecté électriquement à la seconde entrée de l'unité de commutation (50).

9. Système d'alimentation en puissance (1) selon la revendication 8, comprenant un régulateur de tension (60) interconnecté électriquement entre le second nœud (12) de l'empilement de cellules de batterie (10) et la seconde entrée de l'unité de commutation (50), dans lequel le régulateur de tension (60) est configuré pour réduire la tension d'entrée reçue depuis le second nœud (12) à une tension de sortie fournie à l'unité de commutation (50) qui est inférieure à la tension d'entrée.

10. Système d'alimentation en puissance (1) selon la revendication 8, dans lequel le système d'alimentation en puissance (1) comprend une puce frontale analogique (70), AFE, qui est connectée électriquement au premier nœud (11) et au second nœud (12) de l'empilement de cellules de batterie (10) pour recevoir la tension entre eux, comprenant en outre un régulateur de tension interne (72) configuré pour réduire la tension reçue à une tension de sortie inférieure à la tension d'entrée, et dans lequel l'AFE (70) est configurée pour fournir la tension de sortie à une sortie connectée électriquement à la seconde entrée de l'unité de commutation (50).

11. Système d'alimentation en puissance (1) selon l'une des revendications 9 à 10, dans lequel le régulateur de tension (60) et/ou le régulateur de tension interne (72) sont des régulateurs à faible déperdition et/ou dans lequel les régulateurs de tension (60, 72) sont configurés pour délivrer une tension entre 5 et 6 V, de préférence entre 5 et 5,5 V, de manière davantage préférée entre 5 et 5,2 V.

12. Système d'alimentation en puissance (1) selon l'une des revendications 1 à 11, comprenant en outre un régulateur d'alimentation en puissance (80) interconnecté entre l'unité de commutation (50) et le microprocesseur (20), le régulateur d'alimentation en puissance (80) étant configuré pour réguler la tension reçue à une tension d'alimentation requise par le microprocesseur (20).

13. Système d'alimentation en puissance (1) selon l'une des revendications 1 à 12, dans lequel le microprocesseur (20) est configuré pour commuter dans un mode à faible consommation de puissance, lorsque le microprocesseur (20) détecte que la puissance fournie est devenue inférieure à une puissance de seuil.

14. Véhicule comprenant un système d'alimentation en puissance (1) selon l'une quelconque des revendications précédentes.
